(19) Europäisches Patentamt
European Patent Office
Office européen des brevets

(11) Veröffentlichungsnummer : **0 421 215 B1**

# (12) EUROPÄISCHE PATENTSCHRIFT

(45) Veröffentlichungstag der Patentschrift :
**02.02.94 Patentblatt 94/05**

(21) Anmeldenummer : **90118258.4**

(22) Anmeldetag : **22.09.90**

(51) Int. Cl.[5] : **C08G 18/08**, C08G 18/10, C08G 18/24, C08G 18/28, C08G 18/32, C08G 18/73, C08G 18/75

## (54) Verfahren zur Herstellung licht- und abgasbeständiger PUH-Elastomerfäden und -folien und Elastomerfäden entsprechender Zusammensetzung.

(30) Priorität : **03.10.89 DE 3932958**

(43) Veröffentlichungstag der Anmeldung :
**10.04.91 Patentblatt 91/15**

(45) Bekanntmachung des Hinweises auf die Patenterteilung :
**02.02.94 Patentblatt 94/05**

(84) Benannte Vertragsstaaten :
**DE FR GB IT**

(56) Entgegenhaltungen :
**EP-A- 0 155 222**
**DE-A- 1 955 725**
**DE-A- 2 500 921**
**GB-A- 2 024 233**
**CELLULAR POLYMERS, Band 6, Nr. 1, 1987, Seiten 29-36, Shawbury, Shrewsbury, GB; M. BARIKANI et al.: "The relative thermal stability of polyurethane elastomers"**

(73) Patentinhaber : **BAYER AG**
**D-51368 Leverkusen (DE)**

(72) Erfinder : **Frauendorf, Beatrix, Dr.**
**Charlottenburger Strasse 34**
**D-5090 Leverkusen 1 (DE)**
Erfinder : **Süling, Carlhans, Dr.**
**Carl-Leverkus-Strasse 10**
**D-5068 Odenthal (DE)**
Erfinder : **Rudolph, Hans, Prof. Dr.**
**Haydnstrasse 9**
**D-4150 Krefeld (DE)**
Erfinder : **Korte, Siegfried, Dr.**
**Engstenberger Höhe 3**
**D-5068 Odenthal (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der Erfindung ist ein Verfahren zur Herstellung licht- und schadgasbeständiger PUH-Elastomerfäden und -folien auf Basis segmentierter Polyurethanharnstoffe, basierend auf Diisocyanatgemischen aus 30 bis 85 Mol-% trans-1,4-Cyclohexylendiisocyanat und 70 bis 15 Mol-% an weiteren aliphatischen oder cycloaliphatischen Diisocyanaten. Die Diisocyanate werden mit höhermolekularen Dihydroxyverbindungen und gegebenenfalls niedermolekularen Diolen zunächst zu einem NCO-Prepolymer umgesetzt und dann mit aliphatischen Diaminen oder Diamingemischen, vorzugsweise Ethylendiamin, in hochpolaren Lösungsmitteln, gegebenenfalls in Gegenwart von salzartigen Lösungsvermittlern wie Lithiumsalzen und vorzugsweise unter Mitverwendung aliphatischer Kettenabbrecher, insbesondere solcher mit cycloaliphatischer Struktur, zu verarbeitungsstabilen Elastomerlösungen umgesetzt. Diese Lösungen werden in üblicher Weise versponnen oder auch zu Filmen aufgetrocknet oder zu Folien koaguliert.

Erfindungsgegenstand sind auch die segmentierten Polyurethanharnstoff-Elastomere, insbesondere Fäden, entsprechend dem neuen Verfahren.

Rohstoffe für marktgängige Elasthanfäden (Spandex-Fäden) sind segmentierte Polyurethanharnstoffe (PUH) auf Basis von Makrodiolen wie Polyethern oder Polyestern und aromatischen Diisocyanaten, sowie Diaminkettenverlängerungsmitteln. Die Reaktivitäten dieser Bindungsgruppen lassen sich gut aufeinander abstimmen und aus den resultierenden segmentierten Elastomeren kann man die elastischen Fäden mit sehr guten mechanischen Eigenschaften in wirtschaftlicher Verfahrensweise herstellen (vgl. Ullmann, Band 11, 4. Auflage, S. 312 - 320). Ein großer Nachteil dieser Elasthanfäden, wie sie auf dem Markt zugänglich sind, ist jedoch die (durch Verwendung von aromatischen Diisocyanaten bedingte) geringe Echtheit gegenüber Oxidationsmitteln, Lichteinwirkung, Einwirkung von Schadgasen wie Stickoxiden oder von chlorhaltigen Behandlungsflüssigkeiten.

Die Verwendung (cyclo)aliphatischer Diisocyanate bringt bekanntermaßen generell mit sich, daß die damit erhältlichen, aliphatischen Urethan-Gruppierungen enthaltenden Polyurethane zwar weniger verfärbend (vgl. US 3 399 167), aber oft wegen ihrer mangelnden Löslichkeit sehr schwer oder kaum verarbeitbar sind (vgl. Ullmann's Enzyclopedia of Industrial Chemistry, Vol. A 10, Fibers, S. 611) und in den meisten Fällen ungenügende Schmelz/Erweichungseigenschaften aufweisen und keine ausreichend stabilen Lösungen, welche eine sichere Verarbeitung z.B. zu Fäden und Folien ermöglichen, besitzen.

Die Verwendung von geringen Mengen solcher aliphatischer Diisocyanate als den Kettenaufbau modifizierende Bausteine unter Ausnutzung ihrer relativ geringen Reaktionsgeschwindigkeit gegenüber aromatischen Diisocyanaten in der Endstufe der viskositätsaufbauenden Kettenverlängerungsreaktion ist aus der US-Patentschrift 3 377 308 bekannt.

Man hat auch schon versucht, die an sich bekannte bessere Verfärbungsbeständigkeit von (cyclo)aliphatischen Diisocyanaten zum Aufbau von Polyurethanharnstoffen aus anderen, lösungsmittelhaltigen Systemen zu nutzen. So wird in der DE-OS 19 55 725 ein elastomeres, segmentiertes Polyurethanharnstoff-Polyurethan beschrieben, das unter Verwendung von 1,4-Cyclohexylendiisocyanat mit mindestens 55 Gew.-% trans-Anteil (oder Bis-cyclohexyldiisocyanat-Derivaten mit mindestens 50 Gew.-% trans/trans-Anteil) und unsubstituierten oder Methyl- bzw. Ethyl-substituierten 1,4-Cyclohexylen-diaminen mit mindestens 33 Gew.-% trans-Anteil aufgebaut ist.

Diese Zusammensetzungen mit Kettenverlängerungsmitteln auf Basis von 1,4-Cyclohexylendiisocyanaten und -diaminen zeigen zwar sehr gute Lichtbeständigkeit, Beständigkeit gegen Verfärbung durch atmosphärische Gase und durch Chlorbleiche, jedoch ist die Stabilität der Lösung gegen Verpasten (eine Art Desolvatation) außerordentlich gering, so daß eine technische Handhabung für eine Verspinnung zu Elastomerfäden praktisch ausgeschlossen ist.

Die Lösungen verpasten, trotz Gegenwart von bis zu 10 Gew.-% Lithiumchlorid als Lösungsvermittler und in Gegenwart von Kettenabbrechern vom Typ N,N-Dialkylaminoalkylendiamin sehr schnell, so daß eine technisch kontinuierliche Verspinnung nicht möglich ist. Außerdem sind, trotz in gewissem Maße verbesserter mechanischer Eigenschaften gegenüber den Elastomeren mit 4,4'-Diaminodicyclohexylmethan-Kettenverlängerungsmitteln, die Erweichungspunkte noch immer unzureichend und die thermischen und hydrothermischen Eigenschaften nicht ausreichend.

In der GB-PS 1 110 868 werden segmentierte Elastomere auf Basis von cycloaliphatischen Diisocyanaten und cycloaliphatischen Diaminen bestimmter sterischer Anforderungen, die trans/trans-Anteile auf Basis bestimmter 4,4'-Dicycloalkyliden-Verbindungen, gegebenenfalls monofunktioneller Kettenabbrecher wie Diethylamin, gegebenenfalls bis jeweils 10 Mol-% anderer Diisocyanate oder anderer Diaminkettenverlängerungsmittel, beschrieben. Solche cycloaliphatische, segmentierte Elastomere besitzen zwar gute Licht- und Schadgasechtheit sowie akzeptable Festigkeiten und elastische Eigenschaften bei Raumtemperatur, sie sind auch in den üblichen Lösungsmitteln wie Dimethylformamid/Dimethylacetamid relativ gut und relativ stabil in Lösung

zu bringen, doch sind die hierbei erzielbaren Schmelz- und Erweichungsbereiche und entsprechenden thermischen sowie hydrothermischen Eigenschaften an den Fäden völlig unzureichend. Die Unzulänglichkeit dieser Elastomerzusammensetzung ist bereits in dem Vergleichsbeispiel der DE-OS 19 55 725 aufgezeigt.

In der DE-OS 28 29 199 werden segmentierte Elastomere beschrieben, bei denen Makrodiole mit 1,4-Cyclohexylendiisocyanat mit mindestens 90 % trans-Isomerenanteil und Diolen, aliphatischen oder cycloaliphatischen Diaminen oder Hydrazin(derivaten) als Kettenverlängerungsmittel umgesetzt werden. Die mit Butandiol-1,4 kettenverlängerten reinen Polyurethane erweisen sich zwar als noch ausreichend löslich, aber bei Verspinnung zu Fäden in ihren thermischen und hydrothermischen Eigenschaften zur Verwendung im Elasthan-Sektor als ungeeignet. Sie sind vorzugsweise als Gieß-Polyurethan-Elastomere einsetzbar. Mit Hydrazin kettenverlängerte Prepolymere ergeben lichtechte, jedoch gegen Chlor empfindliche Fäden, da offensichtlich die Stickstoff/Stickstoffbindung oxidativ angegriffen wird.

Versuche einer Kettenverlängerungsreaktion mit Diaminen wie 1,4-Diaminocyclohexan oder Ethylendiamin scheitern an der praktisch augenblicklich eintretenden Verpastung selbst relativ verdünnter Lösungen, selbst in Gegenwart von Lösungsvermittlern wie LiCl.

Segmentierte Polyurethanharnstoff-Elastomere auf Basis von Isophorondiisocyanat und Diaminkettenverlängerungsmitteln (vgl. US 3 857 809 oder DDR 253 629) sind viel zu niedrig schmelzend zur Verwendung für Elastomerfäden und sind aus ihrer asymmetrischen Struktur heraus auch in sogenannten "soft solvents", z.B. Toluol/Isopropanol-Mischungen, bereits löslich.

## Aufgabe der Erfindung

war somit, segmentierte Elastomere auf Basis (cyclo)aliphatisch aufgebauter Harnstoff-Hartsegmente (d.h., (cyclo)aliphatischen Diisocyanaten und Diaminen) zur Verfügung zu stellen, welche sowohl licht- und abgasecht sowie chlorbeständig sind, eine ausreichende Stabilität in Lösung in hochpolaren Lösungsmitteln, insbesondere Dimethylformamid und Dimethylacetamid, gegebenenfalls unter Zusatz von Lösungsvermittlern wie Lithiumsalzen, bei anschließender Verarbeitung (Verspinnung) auch unter technischen Bedingungen aufweisen, und ein Mindestmaß an thermischen Eigenschaften (Schmelzbereich, thermische und hydrothermische Eigenschaften) und elastischen Werten, insbesondere auch elastischer Erholung, aufweisen. Diese und weitere Vorteile, wie sie aus der Beschreibung und den Beispielen im einzelnen hervorgehen, konnten durch das erfindungsgemäße Verfahren zur Herstellung bzw. durch entsprechend zusammengesetzte segmentierte Polyurethanharnstoffe erreicht werden.

## Gegenstand der Erfindung

ist somit ein Verfahren zur Herstellung von licht- und schadgasechten Polyurethanharnstoff-Elastomeren aus ausgewählten Baustein-Kombinationen, speziell Fäden mit guten elastischen und insbesondere gleichzeitig guten thermischen Eigenschaften und guter Verspinnbarkeit aus ausreichend stabilen Elastomerlösungen; ferner werden so wie entsprechende Elastomerzusammensetzungen aus bestimmten Diisocyanatgemischen und Diamin-Kettenverlängerungsmittel(gemischen) beansprucht.

Das erfindungsgemäße Verfahren betrifft insbesondere ein Verfahren zur Herstellung von segmentierten Polyurethanharnstoff-Elastomeren auf Basis höhermolekularer Dihydroxyverbindungen (Makrodiole), aliphatischer und/oder cycloaliphatischer Diisocyanate, Diaminen und Kettenabbrechern, gegebenenfalls in Gegenwart von Lösungsvermittlern, und ihre Verformung zu Fäden und Folien nach üblichen Verfahren,
dadurch gekennzeichnet, daß man
in erster Stufe ein NCO-Prepolymer aus

- a) einer höhermolekularen Dihydroxyverbindung mit Molekulargewichten von 1.000 bis 8.000, vorzugsweise 1.500 bis 4.000, z.B. Polyesterdiolen, Polyetherdiolen oder ihren Mischungen,
- b) gegebenenfalls unter Zusatz von niedermolekularen Dihydroxyverbindungen mit Molekulargewichten von 62 bis 399 (z.B. N,N-Bis-(β-hydroxypropyl)-N-methylamin) in Mengen bis höchstens 15 Mol-%, bezogen auf a) und
- c) einem Gemisch an molar überschüssigen Mengen an Diisocyanaten (molar auf (a+b) bezogen) aus
  - c1) 50 bis 85 Mol-%, vorzugsweise 50 bis 80 Mol-%, der eingesetzten Diisocyanate, an trans-1,4-Cyclohexylen-diisocyanat und
  - c2) 50 bis 15 Mol-%, besonders bevorzugt 50 bis 20 Mol-% an weiteren aliphatischen oder cycloaliphatischen Diisocyanaten,
- d) gegebenenfalls in Gegenwart von Katalysatoren, insbesondere Zinnkatalysatoren,
- e) in der Schmelze oder in Lösungsmitteln, vorzugsweise hochpolaren Amidlösungsmitteln wie Dimethylformamid oder insbesondere Dimethylacetamid,

zu einem NCO-Prepolymer mit einem NCO-Gehalt (bezogen auf Feststoff) von 1,5 bis 3,5 %, vorzugsweise 1,9 bis 3,0 %, umsetzt und dieses NCO-Prepolymer, gegebenenfalls nach Verdünnen mit hochpolaren Lösungsmitteln,

mit Lösungen von (f-g) in hochpolaren Lösungsmitteln, aus

f) aliphatischen Alkylendiaminen oder Gemischen aus

f1) aus mindestens 50 Mol-% aliphatischen $C_2$-$C_6$-Alkylendiaminen, insbesondere Ethylendiamin, und

f2) höchstens 50 Mol-% an weiteren aliphatischen und/oder cycloaliphatischen Diaminen, und

g) 0 bis 5 Mol-%, vorzugsweise 0,1-3 Mol-% monofunktionellen Amin-Kettenabbrechern, bevorzugt cyloaliphatischen Monoaminen der allgemeinen Formel

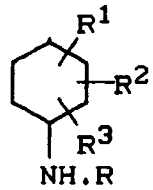

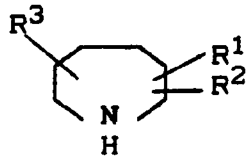

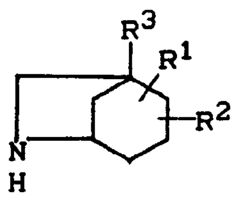

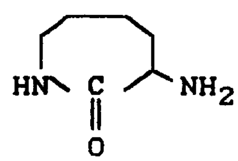

R = H, $C_1$-$C_4$-Akyl oder Cyclohexyl,

$R^1$ $R^2$, $R^3$ = H oder geradkettiges oder verzweigtes $C_1$-$C_4$-Alkyl; mindestens aber eine der Gruppen muß Alkyl sein,

h) und in Gegenwart von salzartigen Lösungsvermittlern, in Mengen von 0 bis 10 Gew.-%, vorzugsweise 0,1 bis 10 Gew.-%, bezogen auf Polyurethanharnstoff-Feststoff, vorzugsweise Lithiumsalzen von anorganischen Säuren oder organischen $C_1$-$C_8$-Carbonsäuren insbesondere Lithiumchlorid,

zu Elastomer-Lösungen mit einer Konzentration von mindestens 15 Gew.-% Feststoffgehalt, vorzugsweise 18 bis 30 Gew.-%, umsetzt

und gegebenenfalls nach Zusatz

i) üblicher Additive

nach üblichen Methoden, insbesondere Trocken- oder Naßspinnprozessen, verformt und vorhandene Lösungsvermittler h) durch Waschen oder Extraktion aus den Fäden bzw. den daraus hergestellten Artikeln entfernt.

Gegenstand der Erfindung sind ferner Fäden und Folien, bevorzugt Fäden mit segmentiertem Aufbau entsprechend dem beschriebenen Verfahren, im Falle der Mitverwendung von Lösungsvermittlern bevorzugt Fäden unter Entfernung der Lösungsvermittler.

Die Elastomerfäden der Erfindung sollen gewissen Mindestbedingungen an hydrothermischen und thermischen Eigenschaften entsprechen, so soll die "heat distortion"-Temperatur mindestens 170°C, die Heißreißzeit mindestens 7 Sek., vorzugsweise mindestens 20 Sek., betragen.

Die erfindungsgemäß aufgebauten, segmentierten Polyester/Polyether-Polyurethanharnstoff-Elastomere liefern klare Spinnlösungen, hinreichend für eine technische Verarbeitung zu Fäden, die nach üblichen Naß- und besonders nach Trockenspinnverfahren sehr gut verarbeitet werden können und hinreichende Lösungsstabilität (Viskositätsstabilität) aufweisen. Die Fäden zeigen ausgezeichnete Stabilität gegen Licht und UV-Einwirkung hinsichtlich Verfärbung und Abbau und sind auch gegen Stickoxide/Verbrennungsabgase sehr farbstabil und geben sehr viel geringeren Abbau als Elastomerfäden auf Basis aromatischer Diisocyanate. Sie zeigen ausgezeichnete thermische und hydrothermische Eigenschaften. Sie übertreffen dabei die technischen Elastomerfäden des Marktes wie Dorlastan® oder LYCRA®, wie sie auf dem Elastomer-Markt überwiegend verarbeitet werden.

Vorteilhaft erweist sich auch eine verringerte Substanzklebrigkeit von Fäden aus der beanspruchten Zusammensetzung, welche einen besseren Fadenablauf von Spulen ergeben.

Die Herstellung der erfindungsgemäßen Polyharnstoffurethan-Elastomeren kann nach an sich bekannten

Verfahrensweisen erfolgen. Besonders bewährt hat sich die Synthese nach NCO-Prepolymer-Verfahren, wobei in der ersten Verfahrensstufe ein höhermolekulares Diol a) im Lösungsmittel oder in der Schmelze mit Diisocyanat c), gegebenenfalls in Gegenwart niedermolekularer Diole b), zu einem NCO-Prepolymer so umgesetzt wird, daß das NCO-Prepolymer NCO-Endgruppen in bestimmter Menge enthält.

Als langkettige, höhermolekulare Dihydroxyverbindungen a) (auch Makrodiole genannt) sind insbesondere Polyesterdiole und Polyetherdiole geeignet. Diese Diole haben im allgemeinen Molekulargewichte von 1.000 bis 8.000, vorzugsweise 1.500 bis 4.000.

Als Polyesterdiole sind z.B. Dicarbonsäurepolyester aliphatischer Dicarbonsäuren geeignet, die sowohl aus mehreren Diolen wie auch mehreren Dicarbonsäuren oder Hydroxycarbonsäuren aufgebaut sein können. Besonders geeignet sind Adipinsäure-Mischester aus Adipinsäure, Hexandiol-1,6 und Neopentylglykol oder Adipinsäure, Butandiol-1,4 und Neopentylglykol oder Adipinsäure, Butandiol-1,4-Hexandiol-1,6 und Neopentylglykol(2,2-Dimethyl-propandiol-1,3).

Als langkettige Polyetherdiole eignen sich besonders Polytetramethylenoxid-diole oder Copolyether mit anderen etherbildenden Verbindungen wie Ethylenoxid odere Propylenoxid.

Es können auch Mischungen aus den genannten Makrodiol-Verbindungen eingesetzt werden.

Weitere höhermolekulare Diolverbindungen, z.B. Dihydroxylactonester oder Dihydroxypolycarbonate sind aus dem Stand der Technik bekannt und können eingesetzt werden.

Als niedermolekulare Diole b) sind z.B. Ethylenglykol, Butandiol-1,2, Butandiol-1,4, 1,4- und/oder 1,3-Cyclohexandimethanol, N,N-Bis-(β-hydroxypropyl)-methylamin, N,N'-Bis-(β-hydroxyethyl)-piperazin, N,N-Dimethyl-N',N'-hydroxyethyl-dimethylhydrazin und andere Verbindungen dieser Stoffklassen einsetzbar.

Als Diisocyanat c) wird erfindungsgemäß ein Diisocyanatgemisch eingesetzt, welches als
Komponente c1) trans-1,4-Cyclohexylen-diisocyanat in Mengen von 30 bis 85 Mol-%, vorzugsweise 50 bis 80 Mol-%, bezogen auf die eingesetzte Molmenge an Gesamtdiisocyanaten in der Mischung, enthält. Es hat sich gezeigt, daß dieses trans-Isomere des 1,4-Cyclohexylendiisocyanats in einer Mindestmenge vorhanden sein muß, um eine Verbesserung - insbesondere der thermischen und hydrothermischen Eigenschaften - zu erzielen. Eine weitere Steigerung macht die Lösungen derartiger Elastomerer jedoch zu instabil und zu schnell verpastend für technische Verwendung.

Als Komponente c2) werden aliphatische und/oder cycloaliphatische Diisocyanate verwendet, welche eine geringere Symmetrie bzw. Steifigkeit aufweisen als c1).

Dies sind insbesonders 1,6-Hexamethylendiisocyanat, 1,8-Octamethylendiisocyanat, 2/3-Methylhexamethylendiisocyanat-1,6 oder 2,4-Diisocyanato-1-methyl-cyclohexan sowie die 4,4'-Dicyclohexylmethan-, 4,4'-Dicyclohexylalkyliden-, 4,4'-Dicyclohexylether-diisocyanate in ihren verschiedenen Stereoisomeren oder Stereoisomergemischen.

Werden aliphatische oder cycloaliphatische Diisocyanate mit mehr als zwei Alkyl- oder Alkylen-Seitenketten verwendet (z.B. Isophorondiisocyanat), so ist die Menge auf < 15 Mol-%, vorzugsweise <10 Mol-% beschränkt, da sie sonst eine zu starke Senkung der thermischen und hydrothermischen Eigenschaften bewirken.

Bei der Synthese der segmentierten Elastomeren nach dem NCO-Prepolymerverfahren werden die Makrodiole in der Schmelze oder in einem Lösungsmittel mit überschüssigen molaren Mengen an Diisocyanaten c) über die Diole (a+b) so umgesetzt, daß das Reaktionsprodukt Isocyanatendgruppen enthält. Die OH/NCO-Verhältnisse werden vorzugsweise zwischen 1:1,4 bis 1:2,5, vorzugsweise 1:1,6 bis 1:2,1, gewählt, so daß NCO-Prepolymere mit einem NCO-Gehalt von 1,5 bis etwa 3,5 Gew.-%, vorzugsweise 2,3 bis 3,1 Gew.-%, NCO entstehen.

Werden Lösungsmittel bei der Prepolymerisationsreaktion verwendet, so eignen sich hierfür beispielsweise Chlorbenzol, bevorzugt aber hochpolare Lösungsmittel wie N-Methylpyrrolidon oder Dimethylsulfoxid und ganz besonders die zumeist als Spinnlösungsmittel benutzten hochpolaren Amid-Lösungsmittel Dimethylformamid und Dimethylacetamid.

Je höher der NCO-Gehalt im Prepolymeren ist, umso besser sind die thermischen und hydrothermischen Eigenschaften in den daraus hergestellten Elastomeren, da der NCO-Gehalt deren Hartsegmentanteil steuert. Je höher der Hartsegmentanteil, umso stärker ist jedoch auch die Verpastungsneigung der Elastomerlösungen wegen ungenügender Solvatationsfähigkeit.

Die Herstellung der Prepolymeren ist häufig aufgrund der relativ reaktionsträgen aliphatischen Diisocyanatgruppen langwierig. Es können 0-1 Gew.-%, vorzugsweise 0,002-0,5 Gew.-% Katalysatoren mitverwendet werden. Es wurde gefunden, daß man durch Zusatz von Katalysatoren d) die Reaktionsgeschwindigkeit so erhöhen kann, daß nach wirtschaftlichen Gesichtspunkten brauchbare Verfahrensbedingungen eingehalten werden können. Es ist im allgemeinen nicht üblich, bei der Herstellung von (Elasthan)-PUH-Elastomeren oder -Spinnlösungen Katalysatoren zu verwenden, weil unter den bekannten Bedingungen mit den bisher bekannten Systemen bevorzugt dann durch Ausbildung von Verzweigungen oder Vernetzung der Produkte Gel- oder

Quellkörper gebildet werden, wenn es sich um Polyurethanharnstoffe handelt. Es war deshalb überraschend, daß bei dem erfindungsgemäßen Verfahren derartige Nachteile nicht auftreten, sondern im Gegenteil eine vorteilhafte Durchführung in Gegenwart von Katalysatoren möglich ist, und wenn man die NCO-Prepolymer-Synthese in Lösung vornimmt.

Als Katalysatoren sind geeignet: Lewis-Säuren-Katalysatoren wie Zinnsalze oder z.B. Organozinnverbindungen wie Organozinncarboxylate oder -halogenide, Dibutylzinndilaurat, anorganische Salze anorganischer Säuren, z.B. Zinnoctoat, Zinnstearat, Zinnacetat, Bleioctoat, Einschubkatalysatoren wie Organozinn-alkoholate, -β-dicarbonylverbindungen, -oxide, -mercaptide, -sulfide, Organo-aminzinnverbindungen, -phosphinzinnverbindungen; ferner sind Lewis-Basen-Katalysatoren wie tertiäre Amine, Phosphine, Pyridine als Katalysatoren geeignet, wie sie im Stand der Technik der Polyurethanherstellung im Prinzip bekannt sind. Vorzugsweise werden Dibutylzinndilaurat (Desmorapid® Z/Bayer AG) oder Diazobicyclooctan (DABCO®) eingesetzt.

Zur Synthese der segmentierten Polyurethanharnstoffe werden die gewünschten Harnstoffgruppen durch eine Kettenverlängerungsreaktion der NCO-Prepolymeren mit Diaminen in die Makromoleküle eingeführt. Die in der NCO-Prepolymerstufe synthetisierten NCO-Prepolymeren (auch Makrodiisocyanate genannt) werden in hochpolaren Lösungsmitteln mit Kettenverlängerungsmitteln f), vorzugsweise aliphatischen Diaminen, gegebenenfalls Kettenabbrechern h) und gegebenenfalls Lösungsvermittlern g) umgesetzt. Dabei wird vorteilhaft durch Auswahl der Kettenverlängerungsmittel Löslichkeit und Kristallisationsfähigkeit sowie Schmelzbereich der Hartsegmente optimal eingestellt. Während bei einer Verwendung von starren Diaminen, die Cyclohexylenreste enthalten (z.B. 1,4-Diaminocyclohexan) nur schwer verarbeitbare, schnell verpastende Lösungen erhalten werden, sind die erfindungsgemäß zu verwendenden Diamingemische gut geeignet. Bevorzugt werden als Diamine f) geradkettige oder verzweigte $C_2$-$C_6$-Diamine alleine oder in überwiegender Menge ($\geqq$ 50 Mol-%) eingesetzt, z.B. 1,2-Propylendiamin, 1,4-Diaminobutan oder 1,6-Diaminohexan oder auch 1,3-Diamino-2,2-dimethylpropan; bevorzugt wird jedoch Ethylendiamin als alleiniges oder überwiegendes Kettenverlängerungsmittel verwendet.

Bei Einsatz von Diamingemischen werden Alkylendiamine, insbesondere Ethylendiamin, als überwiegendes Kettenverlängerungsmittel, zusammen mit (bis maximal 50 Mol-%, bevorzugt bis maximal 30 Mol-%) an unsymmetrischen Diaminen (z.B. 1,2-Propylendiamin, 1,3-Diaminobutan, 1,3-Diaminocyclohexan (cis- und/oder trans), 2,4-Diamino-1-methyl-cyclohexan und ähnlichen Diaminen bevorzugt verwendet. Bei Mitverwendung des (sehr stark asymmetrisch gebauten) Isophorondiamins sollte dessen Einbau auf < 10 Mol-%, vorzugsweise < 5Mol-%, beschränkt bleiben, da andernfalls die hydrothermischen und thermischen Eigenschaften zu stark abgesenkt werden. Andererseits sind jedoch bereits bei solch kleinen Isophorondiaminmengen die Löslichkeitsverbesserungen deutlich.

Es können auch sekundäre Amine wie Piperazin, N-Methylethylendiamin oder N,N'-Dimethyl-ethylendiamin als Codiamine mitverwendet werden, jedoch ist dies weniger bevorzugt.

Die Kettenverlängerungsreaktion erfolgt bevorzugt in Lösung unter Verwendung hochpolarer Lösungsmittel wie Dimethylsulfoxid, N-Methylpyrrolidon, vorzugsweise jedoch Dimethylformamid oder insbesondere Dimethylacetamid.

Zweckmäßig findet die Umsetzung in Gegenwart von Lösungsvermittlern h) statt, welche bestimmte Salze darstellen wie z.B. Kaliumcyanat, Ammoniumrhodanid, Calciumnitrat, Calciumchlorid oder Zinkchlorid. Bevorzugt sind jedoch Lithiumsalze anorganischer oder organischer Säuren, z.B. Lithiumformiat, Lithiumacetat, Lithiumrhodanid, Lithiumtrimethylacetat oder Lithiumbromid. Bevorzugt ist jedoch Lithiumchlorid.

Durch Verwendung einer geringen Menge an monofunktionellen Kettenabbrechern, z.B. Monoaminen, während der Kettenverlängerungsreaktion, läßt sich ein gewünschtes Molekulargewicht einstellen. Völlig überraschend wurde dabei gefunden, daß - im Gegensatz zu den normalen Monoaminen wie z.B. Diethylamin oder Dibutylamin oder asymmetrisches Dimethylhydrazine, wie sie im Stand der Technik verwendet werden - Amino-Kettenabbrecher mit cycloaliphatischen Resten entsprechend der allgemeinen Formel

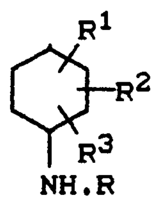

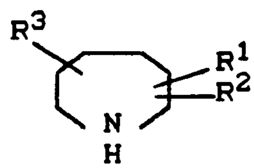

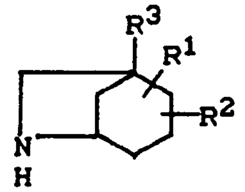

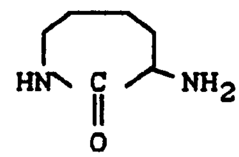

R = H, $C_1$-$C_4$-Akyl oder Cyclohexyl,

$R^1$ $R^2$, $R^3$ = H oder geradkettiges oder verzweigtes $C_1$-$C_4$-Alkyl; mindestens aber eine der Gruppen muß Alkyl, wenn nicht R = Alkyl oder Cycloalkyl ist,

Elastomerlösungen mit drastisch verbesserter Löslichkeit (verringerter Verpastungstendenz) und besserer Fließfähigkeit ergeben und derartige Spinnlösungen über eine ausreichende Zeit technisch verarbeitbar sind.

Durch solche bevorzugte Kettenabbrecher ist es sogar möglich, gegebenenfalls die Menge an Lösungsvermittler (z.B. Lithiumchlorid) deutlich zu senken, ohne daß eine vorzeitige Verpastung eintritt Unter den genannten bevorzugten Kettenabbrechern, sind insbesondere zu nennen Dicyclohexylamin, Cyclohexyl-N-methylamin, N-Cyclohexyl-N-(3-methylcyclohexyl)amin, 1-Amino-3-ethyl-cyclohexan, 1-Amino-3-methylcyclohexan, 1-Amino-3,3,5-trimethyl-cyclohexan, 1-Amino-3-methylcyclohexan, 1-Amino-3-isopropylcyclohexan, 3,3,5-Trimethyl-1-azacycloheptan (TMD-Imin), α-Amino-caprolactam oder ein Amin der Formel

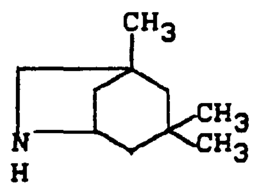

Ein derartiges Verfahren unter Verwendung der bevorzugten Kettanabbrecher ist daher von besonderem technischen Intresse.

Die für den bevorzugten Trockenspinnprozeß notwendige Viskosität der Elastomerlösung liegt im allgemeinen im Bereich von 30 bis 120 Pa.s bei 20°C, wobei die Konzentration der Spinnlösung zwischen 18 und 34 Gew.-% betragen kann. Im Trockenspinnprozeß können die - gegebenenfalls bis ca. 120°C erwärmten - Spinnlösungen mit Viskositäten von mindestens 30 Pa.s bei 20°C durch Düsen in einen auf etwa 150 bis 250°C beheizten, etwa 4 bis 8 m langen Spinnschacht, in den auf etwa 150 bis 350°C beheizte Luft oder Inertgase wie Sticktoff eingeblasen werden, versponnen werden.

Die Lösungen sollten eine Stabilität vor Verpastung von mindestens 24 Stunden, vorzugsweise mindestens 3 Tagen, aufweisen.

Für Naßspinnprozesse eignen sich verdünntere Lösungen; auch sie sollten die genannten Mindeststandzeiten vor Verpastung aufweisen.

Den erfindungsgemäß hergestellten Elastomerlösungen können auch die für verschiedenste Zwecke dienenden Additive in wirksamen Mengen zugesetzt werden. Genannt seien z.B. Antioxidantien, Lichtschutzmittel, UV-Absorber, Schönungsfarbstoffe, Pigmente, Färbeadditive (z.B. tertiär-Amin-haltige Oligomere oder Polymere), Antistatika, abhäsiv wirksame Zusätze wie Magnesium-, Calcium-, Lithium-, Zink- und Aluminiumsalze langkettiger Carbonsäuren wie -stearate, -palmitate oder Dimerfettsäuren oder beliebige Gemische dieser Salze oder auch Zusätze von Zinkoxid, welches bis zu 5 Gew.-% andere Oxide oder Carbonate, z.B. MgO, $MgCO_3$ oder $CaCO_3$ enthalten kann.

Die nach dem erfindungsgemäßen Verfahren erhaltenen Elastomerlösungen können nach den angegebenen Verfahren zu Elastomerfäden versponnen, jedoch auch zu Folienbeschichtungen oder ähnlichen Flächengebilden verarbeitet werden. Dies kann durch Auftrocknen oder durch Koagulation geschehen. Durch die Gegenwart der Salze tritt dabei - je nach Ausführungsform - gegebenenfalls eine mikroporöse Koagulation (Folien mit Wasserdampfdurchlässigkeit) ein. Die erhaltenen Produkte können - soweit sie salzartige Lösungsvermittler enthalten - durch eine Waschnachbehandlung von diesen Lösungsvermittlern befreit werden. Bei einem Naßspinnverfahren reicht im allgemeinen die Behandlung durch Koagulations- und Waschbäder aus, um die Salze zu entfernen (und aus solchen Waschbädern wieder zu gewinnen). Bei Trockenspinnverfahren

bleiben zunächst die Lösungsvermittler im Faden. Da diese Salze unter Umständen die Nebenvalenzkräfte zwischen den Molekülketten verändern, treten in Gegenwart von Salzen gegebenenfalls verminderte thermische Beständigkeit oder Erweichungen ein. Deshalb muß vorzugsweise der Lösungsvermittler in geeigneten Stufen, sei es auf Spulen, sei es im Gewebe oder bei der Ausrüstung, aus den Fäden entfernt werden.

Gleiches trifft für die Messung von Fadeneigenschaften zu. Während bei Naßspinnprozessen die Fäden zumeist keinerlei weitere Nachbehandlung erfahren haben, werden nach dem Trockenspinnprozeß erhaltene Fäden durch Lagerung in Wasser von den Salzen befreit, getrocknet und erst dann gemesssen.

Die erfindungsgemäßen Elastomeren (Fäden oder Folien) zeigen eine ungewöhnliche Kombination von hervorragender Licht-, Abgasechtheit und hohen thermischen und hydrothermischen Eigenschaften. Die hydrothermischen und thermischen Eigenschaften (z.B. ihre "heat distortion"-Temperatur) sind dabei - trotz der aliphatischen Struktur - erheblich besser als die Eigenschaften von auf dem Markt befindlichen Elasthane/Spandexfäden. Ihre ungewöhnliche Kombination von guten thermischen/hydrothermischen Eigenschaften und hervorragender Lichtbeständigkeit und Schadgasbeständigkeit macht sie zu sehr interessanten Ausgangsmaterialien. Die erfindungsgemäß zusammengesetzten Fäden auf aliphatisch/cycloaliphatischer Basis zeigen auch gegenüber anderen elastischen Fäden auf cycloaliphatischer/aliphatischer Basis nach dem Stand der Technik eine erheblich verbesserte elastische Verhaltensweise; insbesondere besitzen sie eine gute elastische Erholung.

Meßmethoden:

Die in den Beispielen erwähnten Meßgrößen wurden wie folgt bestimmt: Die inhärente Viskosität der Elastomeren wurde in verdünnter Lösung von 0,5 g/100 ml Dimethyl acetamid bei 30°C durch Bestimmung der relativen Viskosität $\eta_r$ gegenüber dem reinen Lösungsmittel bestimmt und nach der Formel

$$\eta_R = \frac{t_1}{t_0}$$

$t_1$: Durchlaufzeit (sec) der Polymerlösung
$t_0$: Durchlaufzeit (sec) des reinen Lösungsmittels

$$\eta_i = \frac{\ln \eta_r}{c}$$

umgerechnet. Die Feinheitsfestigkeit wurde in Anlehnung an DIN 53 815 bestimmt (cN/dtex). Die Höchstzugkraftdehnung (in %) erfolgte ebenfalls nach DIN 53 815. Der Modul bei 100 % bzw. 300 % erstmaliger Dehnung wurde bei einer Dehnungsgeschwindigkeit von 4 x $10^{-3}$ Meter pro Sekunde in cN/dtex bestimmt. Die Restdehnung wurde nach fünfmaliger Ausdehnung auf 300 % und nach einer Erholungszeit von 60 Sekunden bestimmt. Die Messung von heat distortion Temperatur (HDT) und Heißreißzeit (HRZ), erfolgte nach Methoden, die in Chemiefasern/Textilindustrie, Januar 1978, Heft 1/78, 28./80. Jahrgang auf Seite 44-49 beschrieben sind. Entsprechende Angaben finden sich auch in DE-OS 25 42 500 (1975).

Die Überprüfung der Lichtechtheit erfolgte nach einer Belichtungszeit von 22 und 132 Stunden im Fade-o-meter-Test.

Die Versuche zur Schadgasechtheit wurden wie folgt durchgeführt:

Die entsprechenden Fäden werden zu Strickschläuchen verstrickt, anschließend 2 Stunden in Petrolether bei Raumtemperatur gewaschen und einer Prüfung der Stickoxidechtheit bei erhöhter Temperatur unterzogen.

In Anlehnung an die ISO-Norm 105-G02 werden hierzu die Prüflinge auf einem drehbaren Gestell in eine auf 60°C beheizte Kammer eingebracht, in die dann mittels einer Injektionsspritze soviel $NO_2$-Gas/Luft-Gemisch gespritzt wurde, daß in der Kammer eine $NO_2$-Konzentration von 600 ppm entstand.

Die Prüflinge wurden 90 Minuten in dieser schadgashaltigen Atmosphäre durch Drehen des Gestells (50 U/min) bewegt. Danach werden Sie entnommen, durch Waschen mit einer 1,3-prozentigen Harnstofflösung von anhaftendem $NO_2$ befreit und an der Luft getrocknet.

Unter Schadgasen werden insbesondere Stickoxide und Verbrennungsabgase verstanden.

<u>Beispiel 1</u> (Vergleichsbeispiel)

508,9 g eines Polyesterdiols auf Basis von Adipinsäure, Hexandiol-1,6 und Neopentylglykol (Molverhältnis 65:35) mit einer OH-Zahl von 56,28 (Molekulargewicht etwa 1990) wurden mit 147,2 g Dimethylacetamid gemischt und mit 79,8 g Hexamethylen-1,6-diisocyanat und 0,5 ml Dibutylzinndilaurat versetzt. Anschließend wurde 40 Min. auf 50 bis 55°C erwärmt, bis der NCO-Gehalt des NCO-Prepolymeren 2,86 Gew.-% (bezogen auf Prepolymer-Feststoff) betrug.

Eine Mischung aus 10,56 g Ethylendiamin und 1739,3 g 2,8 %ige Lithiumchloridlösung in

Dimethylacetamid wurde hergestellt und auf 50°C erwärmt. Zu dieser Mischung wurden unter intensivem Rühren 600 g der NCO-Prepolymerlösung innerhalb von 15 Min. zugesetzt. Man erhielt eine klare, homogene Elastomerlösung mit einem Elastomer-Feststoffgehalt von 21 Gew.-%, einem Lithiumchloridzusatz von 9,97 Gew.-% auf Elastomer-Feststoff = 100 Gew.-% eine Lösungsviskosität von 164,3 Pa.s (bei 20°C). Die inhärente Viskosität betrug 1,09 dl/g (5 g Elastomer-Feststoff pro Liter Dimethylacetamid bei 30°C). Zu der viskosen Elastomerlösung wurden, bezogen auf PUH-Feststoff, 0,3 Gew.-% Magnesiumstearat und 1 % Polyethersiloxane Silwet®, ein Polyether/Polydimethylsiloxan-Copolymer, Lieferfirma Union Carbide, gegeben.

Die Verspinnung erfolgt nach dem Trockenspinnprozeß unter folgenden Bedingungen:

| | |
|---|---|
| Schachttemperatur | 200°C |
| Lufttemperatur | 265°C |
| Düse | 16 Loch, Durchmesser 0,2 mm |
| Spinnkopftemp. | 80°C |
| Luftdralldüse | 0,6 bar |
| Abzug der Galetten 1, 2, 3: | 260/310/310 m/min |

Fadeneigenschaften (gewaschen - die zu messenden Fäden wurden 12 Std. in Wasser bei Raumtemperatur gewässert und bei 40°C vorsichtig getrocknet).

| | | | |
|---|---|---|---|
| Titer | 158 | dtex | |
| Feinheitsfestigkeit | 0,69 | cN/dtex | (DIN 53 815) |
| Höchstzugkraftdehnung | 482 | % | (DIN 53 815) |
| Modul 100 % )bei | | | |
| erstmaliger Dehnung | 0,038 | cN/dtex | |
| Modul 300 % ) | 0,125 | cN/dtex | |
| Heat distortion Temperatur (HDT) | 166 | °C | |
| Restdehnung | 18 | % | |
| Heißreißzeit (HRZ) | reißt | sofort | |
| Erweichungs-/Schmelzbereich (Koflerbank nach 30 sec) | 160 | °C | |

Siehe auch elastische Daten in Tabelle 1

Beispiel 2

496,9 g eines Polyesterdiols, wie im Beispiel 1 beschrieben, wurden mit 144,1 g Dimethylacetamid und 27,9 g trans-1,4-Cyclohexylendiisocyant (35,4 Mol-%) und 51,6 g 1,6-Hexamethylendiisocyanat (64,6 Mol-%) und 0,5 ml Desmorapid® Z versetzt.

Anschließend wurde 65 Min. auf 50 bis 55°C erwärmt, bis der NCO-Gehalt der NCO-Prepolymerlösung 3,092 % betrug.

Eine Mischung aus 11,40 g Ethylendiamin und 1619 g 3-prozentiger Lithiumchloridlösung in Dimethylacetamid wurde hergestellt und auf 50°C erwärmt. Zu dieser Mischung wurden unter intensivem Rühren 600 g der NCO-Prepolymerlösung innerhalb von 15 Min. zugesetzt. Man erhielt eine klare, homogene Elastomerlösung mit einem Elastomer-Feststoffgehalt von 22 Gew.-%, einem Zusatz von 9,88 Gew.-% Lithiumchlorid bzw. Elastomer-Feststoff = 100 und einer Lösungsviskosität von 169,5 Pa.s bei 20°C. Die inhärente Viskosität betrug 1,26 dl/g. Die Stabilität der Lösung ist mindestens 2 Tage gewährleistet.

Zu der viskosen Lösung wurden, bezogen auf PUH-Feststoff, 0,3 Gew.-% Magnesiumstearat und 1 % Polyester-Siloxane Silwet® zugemischt. Die Verspinnung erfolgte nach dem Trockenspinnprozeß, wie im Beispiel 1 beschrieben.

Fadeneigenschaften - wie bei Beispiel 1 gewaschen -

| | |
|---|---|
| Titer | 150 dtex |
| Feinheitsfestigkeit | 0,77 cN/dtex |
| Höchstzugkraftdehnung | 492 % |
| Modul 100 % | 0,030 cN/dtex |
| Modul 300 % | 0,116 cN/dtex |
| HDT | 177,5°C |
| Restdehnung | 11 % |
| Heißreißzeit | 7 Sek. |

Siehe auch elastische Eigenschaften in Tabelle 1.

Beispiel 3

508,5 g eines Polyesters, wie im Beispiel 1 beschrieben, wurden mit 146,9 g Dimethylacetamid und 51,25 g trans-1,4-Cyclohexylendiisocyanat (65 Mol-%) und 27,93 g 1,6-Hexamethylendiisocyanat (35 Mol-%) und 0,5 ml Desmorapid®-Lösung versetzt. Anschließend wurde 75 Min. auf 50 bis 55°C erwärmt, bis der NCO-Gehalt der NCO-Prepolymerlösung 2,18 % betrug.

Eine Mischung aus 10,03 g Ethylendiamin und 1737 g 2,8 prozentiger Lithiumchlorid-Lösung in Dimethylacetamid wurde auf 50°C erwärmt und unter Rühren mit 600 g NCO-Prepolymer innerhalb von 15 Min. versetzt. Man erhielt eine klare, homogene Elastomerlösung mit Elastomer-Feststoffgehalt von 21 Gew.-%, einer Zusatzmenge von 9,9 % Lithiumchlorid, bezogen auf Elastomer, und einer Lösungsviskosität von 101,4 Pa.s. Die inhärente Viskosität der Elastomersubstanz betrug 1,06 dl/g in Dimethylacetamid. Die Verspinnung erfolgte nach dem im Beispiel 1 beschriebenen Trockenspinnverfahren. Die Lösung zeigte eine Stabilität ohne Verpastung über mindestens 2 Tage.

Fadeneigenschaften (gewaschen)

| | |
|---|---|
| Titer | 154 dtex |
| Feinheitsfestigkeit | 0,72 cN/dtex |
| Höchstzugkraftdehnung | 517 % |
| Modul 100 % | 0,033 cN/dtex |
| Modul 300 % | 0,123 cN/dtex |
| HDT | 182 °C |
| Restdehnung | 16 % |
| Heißreißzeit | 21 Sek. |

Siehe auch elastische Eigenschaften in Tabelle 1.

Beispiel 4

(Vergleichsbeispiel zu Beispiel 5 und 6)

500 g eines Polyesterdiols, wie im Beispiel 1 beschrieben, wurden mit 264,2 g Dimethylacetamid und mit 116,6 g Dicyclohexylmethan-4,4'-diisocyanat (Isomerengemisch aus 41,9 % trans/trans, 40,06 % cis/trans, 18,03 % cis/cis) und 0,5 ml Desmorapid® Z versetzt. Die Prepolymerlösung (70 Gew.-% Feststoffgehalt) wurde 60 Minuten auf 85 bis 90°C erwärmt, bis der NCO-Gehalt des Prepolymeren 2,51 % betrug.

Eine Mischung aus 13,7 g Tetramethylendiamin (TMDA), 0,4 g N-Methylamino-cyclohexan (entspricht 1 Äquivalent-% TMDA) und 1577 g einer 3 gew.-prozentigen LiCl-Lösung in Dimethylacetamid wurde hergestellt und auf 50°C erwärmt. Zu der Mischung wurden unter intensivem Rühren 700 g der NCO-Prepolymerlösung innerhalb von 15 Min. zugesetzt. Man erhält eine klare, homogene Elastomerlösung mit einem Elastomer-Feststoffgehalt von 22 Gew.-%, einem LiCl-Zusatz von 9,39 Gew.-% auf Elastomerfeststoff, einer Lösungsviskosität von 131,1 Pa.s (bei 20°C) und einer inhärenten Viskosität von 0,97 dl/g. Die Polymerlösung wurde anschließend trockenversponnen. Die Polymerlösung blieb 1 Monat viskositätsstabil und homogen.

Fadeneigenschaften (ungewässert)

| | |
|---|---|
| Titer | 203 dtex |
| Feinheitsfestigkeit | 0,65 cN/dtex |
| Höchstzugkraftdehnung | 518 % |
| Modul 100 % | 0,033 cN/dtex |
| Modul 300 % | 0,096 cN/dtex |
| HDT | 168° C |
| Restdehnung | 23 % |
| HRZ | reißt sofort |
| Erweichungs-/Schmelzbereich (Koflerbank nach 30 sec.) | 180° C. |

Siehe weitere elastische Daten in Tabelle 1.

Beispiel 5

496,9 g eines Polyesters, wie im Beispiel 1 beschrieben, wurden mit 147,9 g Dimethylacetamid und mit 51,25 g trans-1,4-Cyclohexylendiisocyanat (65 Mol-%) und 43,60 g Dicyclohexylmethan-4,4'-diisocyanat (14,7 Mol-% trans/trans-, 14 Mol.-% cis/trans, 6,3 Mol.-% cis/cis-Isomeren) und 0,5 ml Desmorapid® Z versetzt. Anschließend wurde 40 Min. auf 50°C erwärmt, bis der NCO-Gehalt des Prepolymeren 2,31 % betrug.

Eine Mischung aus 10,65 g Ethylendiamin und 1620 g 3 Gew.-%iger Lithiumchlorid-Lösung in Dimethylacetamid wurde hergestellt und zu dieser Mischung wurden 600 g NCO-Prepolymerlösung langsam eingetragen.

Man erhielt eine klare, homogene Lösung mit einem Elastomer-Feststoffgehalt von 22 Gew.-%, einen Lithiumchlorid-Zusatz von 9,9 Gew.-%, bezogen auf Elastomer-Feststoff und einer Lösungsviskosität von 244,9 Pa.s/20°C. Die inhärente Viskosität des Elastomers betrug 0,94 dl/g in Dimethylacetamid. Die Lösung war nach 2 Tagen stabil und fließfähig. Die Verspinnung erfolgte wie in Beispiel 1 nach dem Trockenspinnverfahren.

Fadeneigenschaften (gewaschen)

| | |
|---|---|
| Titer | 169 dtex |
| Feinheitsfestigkeit | 0,7 cN/dtex |
| Höchstzugkraftdehnung | 509 % |
| Modul 100 % | 0,035 cN/dtex |
| Modul 300 % | 0,129 cN/dtex |
| HDT | 189 °C |
| Restdehnung | 22 % |
| HRZ | 7 Sek. |

Weitere elastische Eigenschaften sind in Tabelle 1 aufgeführt.

Beispiel 6

500 g eines Polyesterdiols, wie im Beispiel 1 beschrieben, wurden mit 251,4 g Dimethylacetamid und mit 51,72 g trans-1,4-Cyclohexylendiisocyanat (70 Mol-%) und 34,98 g trans,trans-Dicyclohexylmethan-4,4'-diisocyanat (30 Mol.-%) versetzt. Anschließend wurde 60 Min. auf 90°C erwärmt, bis der NCO-Gehalt des Prepolymeren 2,59 % betrug. Der Feststoffgehalt der Prepolymerlösung betrug 70 Gew.-%.

Eine Mischung aus 14,2 g Tetramethylendiamin (TMDA), 0,37 g N-Methylamino-cyclohexan (entspricht 1 Äquivalent-% TMDA) und 1578,9 g einer 3 gew.-prozentigen LiCl-Lösung in Dimethylacetamid wurde hergestellt und auf 50°C erwärmt. Zu dieser Mischung wurden unter intensivem Rühren 700 g der NCO-Prepolymerlösung innerhalb von 15 Min. zugesetzt.

Man erhielt eine klare, homogene Elastomerlösung mit einem Elastomerfeststoffgehalt von 22 Gew.-%,

einem LiCl-Zusatz von 9,39 Gew.-% auf Elastomerfeststoff, einer Lösungsviskosität von 47,7 Pa.s (20°C) und einer inhärenten Viskosität von 1.06 dl/g. Die Polymerlösung wurde ohne weitere Zusätze trockenversponnen. Die Polymerlösung blieb 1 Monat viskositätsstabil und homogen.

Fadeneigenschaften (gewaschen)

| | | |
|---|---|---|
| Titer | 231 | dtex |
| Feinheitsfestigkeit | 0,59 | cN/dtex |
| Höchstzugkraftdehnung | 488 | % |
| Modul 100 % | 0,034 | cN/dtex |
| Modul 300 % | 0,103 | cN/dtex |
| HDT | 170° C | |
| Restdehnung | 22 | % |
| HRZ | 12 | Sek. |
| Erweichungs-/Schmelzbereich (Koflerbank nach 30 sec.) | 220° C. | |

Siehe weitere elastische Daten in Tabelle 1.

Vergleichsbeispiel 7

(Vergleichsbeispiel zu Beispiel 8, 9, 10)

489 g eines Polyesters, wie im Beispiel 1 beschrieben, wurden mit 142 g Dimethylacetamid und mit 74,91 g trans-1,4-Cyclohexylendiisocyanat (95 Mol.-%) und 3,94 g cis-1,4-Cyclohexylendiisocyanat (5 Mol.-%) und 0,5 ml Desmorapid® Z versetzt. Anschließend wurde 7 Stunden auf 50°C erwärmt, bis der NCO-Gehalt des Prepolymeren 2,58 % betrug.

Eine Mischung aus 9,87 g Ethylendiamin und 1617 g 3 Gew.-% Lithiumchlorid-Lösung in Dimethylacetamid wurde hergestellt und zu dieser Mischung wurden bei Raumtemperatur 600 g der NCO-Prepolymerlösung langsam eingetragen. Man erhielt eine klare, homogene Lösung mit einem Elastomer-Feststoffgehalt von 22 Gew.-%, einen Lithiumchloridzusatz von 9,9 Gew.-%, bezogen auf Elastomer-Feststoff und einer Lösungsviskosität von 80,1 Pa.s/20°C. Die inhärente Viskosität betrug 0,91 gl/g in Dimethylacetamid. Die Verspinnung erfolgte nach dem Trockenspinnverfahren. Die Elastomerlösung war nach 6 Stunden verpastet.

Fadeneigenschaften (gewaschen)

| | | |
|---|---|---|
| Titer | 141 | dtex |
| Feinheitsfestigkeit | 0,60 | cN/dtex |
| Höchstzugkraftdehnung | 460 | % |
| Modul 100 % | 0,044 | cN/dtex |
| Modul 300 % | 0,210 | cN/dtex |
| HDT | 185 | °C |
| Restdehnung | 22 | % |
| HRZ | 20 | sec |
| Erweichungs-/Schmelzbereich | | |
| (Koflerbank nach 30 sec.) | 180°C. | |

Siehe weitere elastische Daten in Tabelle 1.

Wenn auch in diesem Vergleichsversuch auf Basis 95 % trans/5 % cis 1,4-Cyclohexandiisocyanat gute thermische und hydrothermische Eigenschaften erhielt werden können, so ist jedoch die Stabilität von nur 6 Stunden der Elastomerlösung gegen Verpastung viel zu schlecht (zu kurze Zeit als Lösung stabil), um eine technische Verwendung zu ermöglichen.

Beispiel 8

496,9 g eines Polyesters gemäß Beispiel 1, wurden mit 143,9 g Dimethylacetamid und mit 67,10 g trans-1,4-Cyclohexylendiisocyanat (85 Mol-%) und 11,75 g cis-Cyclohexylendiisocyanat (15 Mol-%) und 0,5 ml Desmorapid® Z versetzt. Anschließend wurde 40 Min. auf 50°C erwärmt, bis der NCO-Gehalt der NCO-Prepolymerlösung 2,41 % betrug.

Eine Mischung aus 11,11 g Ethylendiamin und 1741 g 3 %iger Lithiumchlorid-Lösung in Dimethylacetamid wurde hergestellt und zu dieser Mischung bei Raumtemperatur unter intensivem Rühren 600 g NCO-Prepolymerlösung zugesetzt. Man erhielt eine klare, homogene Elastomerlösung (enthaltend 9,9 Gew.-% Lithiumchloridzusatz, bezogen auf den Feststoff) mit einem Elastomer-Feststoffgehalt von 20,9 % und einer Lösungsviskosität von 47,7 Pa.s/20°C. Die inhärente Viskosität betrug 1,08 dl/g. Die Lösung war 2 Tage stabil und verspinnbar.

Fadeneigenschaften (gewaschen)

| | |
|---|---|
| Titer | 198 dtex |
| Feinheitsfestigkeit | 0,7 cN/dtex |
| Höchstzugkraftdehnung | 380 % |
| Modul 100 % | 0,047 cN/dtex |
| Modul 300 % | 0,347 cN/dtex |
| HDT | 200°C |
| Restdehnung | 20 % |
| HRZ | 55 Sek. |

Weitere elastische Eigenschaften sind in Tabelle 1 aufgelistet.

Die Filamentgarne zeigten eine deutlich verminderte Hafttendenz, so daß sie sich gut von der Spule abwickeln lassen, ohne daß dazu Einspinn-Hilfsmittel, wie z.B. Magnesiumstearat, notwendig waren.

Beispiel 9

496,9 g eines Polyesters, wie im Beispiel 1 beschrieben, wurden mit 143,9 g Dimethylacetamid und mit 55,2 g trans-1,4-Cyclohexylendiisocyanat (70 Mol-%) und 23,66 g (30 Mol.-%) cis-1,4-Cyclohexyleniisocyanat sowie 0,5 ml Desmorapid® Z versetzt. Anschließend wurde 50 Min. auf 50°C erwärmt, bis der NCO-Gehalt

des Prepolymeren 2,40 % betrug.

Eine Mischung aus 11,07 g Ethylendiamin und 1621 g 3-prozentiger Lithiumchlorid-Lösung in Dimethylacetamid wurde hergestellt und zu dieser Mischung wurden 600 g Prepolymer gegeben. Man erhielt eine klare, homogene Spinnlösung, enthaltend 9,9 Gew.-% Lithiumchlorid, bezogen auf Elastomer-Feststoff, mit einer Lösungsviskosität von 306,3 Pa.s/20°C und einer inhärenten Viskosität von 1,06 dl/g. Die Lösung war 2 Tage stabil. Die Verspinnung erfolgte nach dem Trockenspinnprozeß entsprechend Beispiel 2.

Fadeneigenschaften (gewaschen)

| | | |
|---|---|---|
| Titer | 132 | dtex |
| Feinheitsfestigkeit | 0,7 | cN/dtex |
| Höchstzugkraftdehnung | 470 | % |
| Modul 100 % | 0,042 | cN/dtex |
| Modul 300 % | 0,203 | cN/dtex |
| HDT | 194° C | |
| Restdehnung | 17 | % |
| HRZ | 44 | Sek. |
| Erweichungs-/Schmelzbereich (Koflerbank nach 30 Min.) | 250 | °C |

Weitere elastische Eigenschaften sind in Tabelle 1 aufgelistet.

Beispiel 10

500 g eines Polyesters, wie in Beispiel 1 beschrieben, wurden mit 50 g trans-1,4-Cyclohexylendiisocyanat (67,7 Mol.-%) und 23,85 g cis-1,4-Cyclohexylendiisocyanat (32,3 Mol.-%) versetzt. Anschließend wurde 20 Stunden auf 50°C erwärmt, bis der NCO-Gehalt der Prepolymerschmelze 2,38 Gew.-% betrug. Die Prepolymerschmelze wurde mit 380 g Dimethylacetamid auf 60 Gew.-% des Feststoffs verdünnt.

Eine Mischung aus 7,67 g Ethylendiamin (EDA), 0,29 g N-Methylcyclohexylenamin (entspricht 1 Amin-Äquivalent-% EDA) und 1555,5 g 2,7-prozentiger Lithiumchlorid-Lösung in Dimethylacetamid wurde hergestellt. Zu dieser Mischung wurde bei Raumtemperatur 700 g der NCO-Prepolymerlösung gegeben. Man erhielt eine klare, homogene Spinnlösung, enthaltend 9,8 Gew.-% Lithiumchlorid, bezogen auf Elastomerfeststoff, mit einer Lösungsviskosität von 96,6 Pa.s/20°C und einer inhärenten Viskosität von 1,42 dl/g. Die Lösung war 1 Woche stabil. Die Lösung wurde trockenversponnen.

Fadeneigenschaften (gewaschen)

| | | |
|---|---|---|
| Titer | 156 | dtex |
| Feinheitsfestigkeit | 0,64 | cN/dtex |
| Höchstzugkraftdehnung | 466 | % |
| Modul 100 % | 0,043 | cN/dtex |
| Modul 300 % | 0,164 | cN/dtex |
| HDT | 188° C | |
| Restdehnung | 11 | % |
| HRZ | 22 | Sek. |
| Erweichungs-/Schmelzbereich (Koflerbank nach 30 sec) | 220 | °C |

Weitere elastische Eigenschaften sind in Tabelle 1 aufgelistet.

Beispiel 11

(Vergleichsbeispiel zu Beispiel 12)

200 g eines Polyesters, wie im Beispiel 1 beschrieben, werden mit 138,6 g Dimethylacetamid und 46,4 g Diphenylmethan-4,4'-diisocyanat (MDI) versetzt. Die Prepolymerlösung (64 Gew.-% Feststoffgehalt) wurde 60 Minuten auf 40 bis 50°C erwärmt, bis der NCO-Gehalt des Prepolymers 2,51 % betrug.

Eine Mischung aus 195,4 g Dimethylacetamid und 1,26 g Ethylendiamin wurde hergestellt und mit 6 g $CO_2$ versetzt. Zu dieser Carbamatsuspension wurden unter intensivem Rühren 100 g der NCO-Prepolymerlösung innerhalb von 15 Minuten zugesetzt.

Man erhielt eine klare, homogene Elastomerlösung mit einem Elastomer-Feststoffgehalt von 22 Gew.-%, einer Lösungsviskosität von 24,9 Pa.s (20°C) und einer inhärenten Viskosität von 1,24 dl/g. Die Polymerlösung wurde ohne weitere Zusätze anschließend unter folgenden Bedingungen naßversponnen:

| | |
|---|---|
| Düse: | 20 Loch, Durchmesser 0,12 mm |
| Pumpe: | 0,3 ml/U |
| Düsenfilter: | 9000 M/cm$^2$ |
| Fällbad: | Dimethylformamid/$H_2O$ = 4/6 |
| Fällbadtemperatur: | 75°C |
| Fällbadlänge: | 2,80 m |
| Abzug des Aufwickelkorbs: | 6 m/min, Temp. des Korbes 80°C |
| Abzug der Galette: | 7,5 m/min |

Fadeneigenschaften

| | |
|---|---|
| Titer | 187 dtex |
| Feinheitsfestigkeit | 0,73 cN/dtex |
| Höchstzugkraftdehnung | 511 % |
| Modul 100 % | 0,056 cN/dtex |
| Modul 300 % | 0,170 cN/dtex |
| Restdehnung | 27 % |
| HRZ | 26 Sek. |

Wie aus den Fadeneigenschaften zu ersehen ist, sind insbesondere die termischen Daten und die Restdehnung der Vergleichsfäden schlechter als bei den in Beispiel 12 beschriebenen, erfindungsgemäßen Fäden.

Beispiel 12

100 g eines Polyesterdiols, wie im Beispiel 1 beschrieben, wurden mit 9,99 g trans-1,4-Cyclohexandiisocyanat (67,6 Mol.-%) und 4,77 g cis-1,4-Cyclohexandiisocyanat (32,4 Mol.-%) gemischt. Diese

Mischung wurde bei 80°C geschmolzen und 18 Stunden auf 100°C erwärmt, bis der NCO-Gehalt der Prepolymerschmelze 2,25 % betrug. Die Prepolymerschmelze wurde mit 76,5 g Dimethylacetamid auf einen Feststoffgehalt von 60 Gew.-% verdünnt.

Eine Mischung aus 1,03 g Ethylendiamin, 0,04 g N-Methylcyclohexylamin (entspricht 1 Vol.-Äquivalent-% Ethylendiamin) und 176,5 g einer 3-gew.-prozentigen LiCl-Lösung in Dimethylacetamid wurde hergestellt. Zu dieser Mischung wurde bei Raumtemperatur unter intensivem Rühren 100 g der NCO-Prepolymerlösung innerhalb von 15 Minuten zugesetzt. Man erhielt eine klare, homogene Elastomerlösung mit einem Elastomer-Feststoffgehalt von 22 Gew.-%, einem LiCl-Zusatz von 8,67 Gew.-% auf Elastomerfeststoff, einer Lösungsviskosität von 28,6 Pa.s (20°C) und einer inhärenten Viskosität von 1,08 dl/g. Die Polymerlösung wurde ohne weitere Zusätze anschließend naßgesponnen.

Fadeneigenschaften (ungewässert)

| | |
|---|---|
| Titer | 183 dtex |
| Feinheitsfestigkeit | 0,48 cN/dtex |
| Höchstzugkraftdehnung | 546 % |
| Modul 100 % | 0,055 cN/dtex |
| Modul 300 % | 0,171 cN/dtex |
| Restdehnung | 15 % |
| HDT | 195 °C |
| HRZ | 73 Sek. |

Die in Tabelle 1 aufgeführten Verhältnisse sind wie folgt definiert:

| | |
|---|---|
| Linearitätsverhältnis: 5.B.150/5.B.300 | Kraftaufnahme bei fünfter Belastung und 150 % Dehnung zu Kraftaufnahme bei fünfter Belastung und 300 % Dehnung im Dehnungspendelexperiment. |
| Relaxationsverhältnis: E.300/B.300 | Nach fünf Dehnungszyklen bis 300 % Dehnung: Kraftaufnahme nach 6. Dehnung bis 300 % und einer Verweildauer von 60 sec. (Entlastung bei 300 %) zur Kraftaufnahme nach sechster Belastung bei 300 % Dehnung. |
| Ermüdungsverhältnis: 5.B.300/1.B.300 | Kraftaufnahme bei fünfter Belastung und 300 % Dehnung zu Kraftaufnahme bei erster Belastung und 300 % Dehnung. |
| Ermüdungsverhältnis: 5.B.150/1.B.150 | Kraftaufnahme bei fünfter Belastung und 150 % Dehnung zu Kraftaufnahme bei erster Belastung und 150 % Dehnung. |
| Ermüdungsverhältnis: 5.B.50/1.B.50 | Kraftaufnahme bei fünfter Belastung und 50 % Dehnung zu Kraftaufnahme bei erster Belastung und 50 % Dehnung. |

| | |
|---|---|
| Hystereseverhältnis: 5.E.150/5.B.150 | Kraftaufnahme bei fünfter Entlastung und 150 % Dehnung zu Kraftaufnahme bei fünfter Belastung und 150 % Dehnung. |
| Hystereseverhältnis: 5.E.150/1.B.150 | Kraftaufnahme bei fünfter Entlastung und 150 % Dehnung zu Kraftaufnahme bei erster Belastung und 150 % Dehnung. |
| Hystereseverhältnis: 5.E.50/5.B.50 | Kraftaufnahme bei fünfter Entlastung und 50 % Dehnung zu Kraftaufnahme bei fünfter Belastung und 50 % Dehnung. |
| Hystereseverhältnis: 5.E.50/1.B.50 | Kraftaufnahme bei fünfter Entlastung und 50 % Dehnung zu Kraftaufnahme bei erster Belastung und 50 % Dehnung. |

Je größer der Wert der genannten Verhältnisse ist, umso besser sind die elastischen Eigenschaften.

Aus Tabelle 1 wird deutlich, daß die im Patent beanspruchten Elasthane bessere elastische Eigenschaften besitzen als die Vergleichselasthane.

**Tabelle 1:** Elastisches Verhalten der beschriebenen Elasthanfäden

| | Bsp. 1 (Vgl. zu Bsp. 2+3) | Bsp. 2 | Bsp. 3 | Bsp. 4 (Vgl. zu Bsp.5+6) | Bsp. 5 | Bsp. 6 | Bsp. 7 Vgl. Bsp. 8, 9, 10) | Bsp. 8 | Bsp. 9 | Bsp. 10 |
|---|---|---|---|---|---|---|---|---|---|---|
| Linearitätsverhältnis 5.B.150/5.B.300 | 0,23 | 0,26 | 0,28 | 0,32 | 0,25 | 0,30 | 0,17 | 0,13 | 0,18 | 0,21 |
| Relaxationsverhältnis E.300/B.300 | 0,75 | 0,74 | 0,71 | 0,66 | 0,65 | 0,68 | 0,66 | 0,65 | 0,69 | 0,69 |
| Ermüdungsverhältnis 5.B.300/1.B.300 | 0,85 | 0,75 | 0,79 | 0,62 | 0,66 | 0,67 | 0,68 | 0,65 | 0,66 | 0,67 |
| Ermüdungsverhältnis 5.B.150/1.B.150 | 0,46 | 0,54 | 0,55 | 0,48 | 0,43 | 0,48 | 0,54 | 0,33 | 0,38 | 0,37 |
| Ermüdungsverhältnis 5.B.50/1.B.50 | 0,45 | 0,59 | 0,50 | 0,38 | 0,43 | 0,40 | 0,38 | 0,40 | 0,43 | 0,42 |
| Hystereseverhältnis 5.E.150/5.B.150 | 0,71 | 0,76 | 0,62 | 0,63 | 0,70 | 0,70 | 0,50 | 0,74 | 0,75 | 0,73 |
| Hystereseverhältnis 5.E.150/1.B.150 | 0,33 | 0,41 | 0,34 | 0,30 | 0,30 | 0,33 | 0,17 | 0,25 | 0,29 | 0,27 |
| Hystereseverhältnis 5.E.50/5.B.50 | 0,67 | 0,70 | 0,56 | 0,38 | 0,44 | 0,50 | 0,56 | 0,50 | 0,60 | 0,70 |
| Hystereseverhältnis 5.E.50/1.B.50 | 0,30 | 0,41 | 0,28 | 0,14 | 0,19 | 0,20 | 0,21 | 0,20 | 0,26 | 0,29 |

Bewertung der Lichtechtheit im Fade-o-meter-Test

Aus dem unstabilisierten Elasthan, wie im Beispiel 10 beschrieben, wurde ein Strickstrumpf hergestellt, anschließend 2 Stunden in Petrolether bei Raumtemperatur gewaschen und einer Prüfung auf Lichtechtheit unterzogen. Zusätzlich wurde das Material verschiedenen Aufhellungsverfahren unterzogen und 22 Stunden bzw. 132 Stunden im Fade-o-meter belichtet. Das so behandelte aliphatische Elasthan wurde mit einem unstabilisierten Polyurethanharnstoff-Elasthan auf Basis des aromatischen Diisocyanats MDI (hergestellt nach der Rezeptur wie im Beispiel 11, jedoch mit einerLösungsviskosität 80 Pa.s/20°C und trockenversponnen) verglichen.

In allen Fällen wurde eine überragende Lichtechtheit, selbst bei den unter harten Aufhellungsbedingungen behandelten Proben, gegenüber dem bereits stark gelb- bzw. braungefärbten 'aromatischen' Polyurethanharnstoff-Elasthanen gefunden.

Aufhellrezepturen

1. 80 Minuten bei 100°C in Wasser, Flotte 1 : 30

2. Peroxidbleiche:

| | |
|---|---|
| $MgSO_4 \cdot 7H_2O$ | 0,2 g/l |
| Levapon AN fl | 0,5 ml/l |
| Wasserglas | 2 ml/l |
| $H_2O_2$ 35 % | 6 ml/l |
| Blankophor BA fl | 0,7 % |
| Blankophor DCB ultraf. | 0,2 % |

80 Min. bei 90 bis 95°C
Flotte 1 : 30

3. Bleiche:

| | |
|---|---|
| $MgSO_4 \cdot 7H_2O$ | 0,2 g/l |
| Levapon AN fl | 0,5 ml/l |
| Wasserglas | 2 ml/l |
| $H_2O_2$ 35 % | 6 ml/l |
| Blankophor BA fl | 0,7 % |
| Blankophor DCB ultraf. | 0,2 % |

80 Min. bei 90 bis 95°C
Flotte 1 : 30

4. Saure Aufhellung:

| | |
|---|---|
| Blankit IN | 2 g/l |
| Calgon T | 2 g/l |
| Diadavin EWN 200% | 0,5 g/l |
| Blankophor Cl fl | 0,5 g/l |

40 Min. bei 80 bis 85°C
essigsauer pH 4
Flotte 1 : 30

5. Saure Aufhellung:
wie unter 4.
80 Min. bei 90 bis 95°C

| | |
|---|---|
| Blankophore® | von Firma Bayer AG |
| Diadavin® | von Firma Bayer AG |
| Calgon T® | von Firma Benckiser |
| Levapon® | von Firma Bayer AG |
| Blankit® | von Firma Bayer AG |

Bewertung der Stickoxidechtheit durch einen $NO_2$-Heißbegasungstest (Test für Stabilität gegen Schadgas-Einwirkung)

Dazu werden aus den Elastanfäden von Beispiel 2 und 5 (erfindungsgemäße Elastomere) und Beispiel 11 (Vergleichsbeispiel mit MDI) Strickstrümpfe hergestellt und entsprechend den $NO_x$-Testbedingungen unterworfen.

Die Ergebnisse zeigen eine überragende $NO_x$-Echtheit der unstabilisierten, erfindungsgemäßen Elastomere gegenüber dem unstabilisierten Elasthan auf Basis von MDI.

Zusätzlich wurden folgende Elastanlösungen hergestellt:

**Beispiel 13**

Prepolymer-Herstellung (50° C, 75 min, 5 ml Desmorapid® Z, 2,56 %, NCO fest):

| | Polyester (wie im Beispiel 1 beschrieben) | cis,cis-Dicyclohexylmethan-4,4'-diisocyanat | trans-1,4-Cyclohexylendiisocyanat | DMAC |
|---|---|---|---|---|
| a) | 500 g | 41 g | 48,1 g | 252,5 g |
| b) | 200 g | 16,4 g | 19,3 g | 101 g |

Kettenverlängerung nach dem Carbamatverfahren (Feststoffkonz. 22 %):

| Prepolymer | Ethylendiamin | Kettenabbrecher | Lösungsmittel (222g DMAc + LiCl) | Vis. [Pa.s] | η: |
|---|---|---|---|---|---|
| 100 g a) | 1,36 g | 0,34 g Diethylamin | 3 % LiCl in DMAc | 24,8 | 1,09 |
| 100 g a) | 1,33 g | 0,199 g TMD | 1 % LiCl in*) DMAC | 15,1 | 0,80 |
| 100 g a) | 1,33 g | 0,2 g 1-Amino-3,3,5-trimethylcyclohexan | 1 % LiCl in*) DMAc | 39,4 | 0,88 |
| 100 g b) | 1,37 g | ohne Kettenabbrecher | 1 % LiCl in DMAc | 101,9 | 1,11 |

*) mit den bevorzugten Kettenabbrechern konnte der LiCl-Gehalt auf 1/3 der üblichen Menge reduziert werden, da die Löslichkeit der Elastomeren deutlich verbessert ist.

Aus den Elastanlösungen im Beispiel 13 (erfindungsgemäße Elastane) und aus Beispiel 11 (Vergleichsbeisiel mit MDI) wurden Filme hergestellt und entsprechend den $NO_x$-Testbedingungen unterworfen.

Die Messungen zeigen auch hier eine überragende $NO_x$-Echtheit der unstabilisierten, erfindungsgemäßen Elasthane gegenüber dem unstabilisierten Elasthan auf Basis von MDI.

**Patentansprüche**

1. Verfahren zur Herstellung von segmentierten Polyurethanharnstoff-Elastomeren auf Basis höhermolekularer Dihydroxyverbindungen, aliphatischer und/oder cycloaliphatischer Diisocyanate und Diamine, Kettenabbrecher und gegebenenfalls in Gegenwart von Losungsvermittlern, dadurch gekennzeichnet, daß man
in erster Stufe ein NCO-Prepolymer aus
    a) einer höhermolekularen Dihydroxyverbindung mit Molekulargewichten von 1.000 bis 8.000,
    b) gegebenenfalls unter Zusatz von niedermolekularen Dihydroxyverbindungen mit Molekulargewichten von 62 bis 399 und
    c) einem Gemisch an molar überschüssigen Mengen an Diisocyanaten (molar auf (a+b) bezogen) aus
        c1) 50 bis 85 Mol-% (bezogen auf eingesetzte Diisocyanate) trans-1,4-Cyclohexylendiisocyanat und
        c2) 50 bis 15 Mol-% an weiteren aliphatischen oder cycloaliphatischen Diisocyanaten,
    d) in Gegenwart von 0 bis 0,15 Gew.-% bezogen auf a), an Katalysatoren,
    e) in der Schmelze oder in Lösungsmitteln,
zu einem NCO-Prepolymer mit einem NCO-Gehalt (bezogen auf Feststoff) von 1,5 bis 3,5 % umsetzt und dieses NCO-Prepolymer, gegebenenfalls nach Verdünnen mit hochpolaren Lösungsmitteln,
mit Lösungen von (f-g) in hochpolaren Lösungsmitteln, aus
    f) aliphatischen Alkylendiaminen oder Gemischen aus
        f1) aus mindestens 50 Mol-% aliphatischen $C_2$-$C_6$-Alkylendiaminen und
        f2) höchstens 50 Mol-% an weiteren aliphatischen und/oder cycloaliphatischen Diaminen, und
    g) 0 - 5 Mol% monofunktionellen Amin-Kettenabbrechern, und
    h) in Gegenwart von 0 - 10 Gew.-% salzartigen Lösungsvermittlern, bezogen auf Polyurethanharnstoff-Feststoff, zu Elastomerlösungen mit einer Konzentration von mindestens 18 Gew.-% Feststoffgehalt und einer inhärenten Viskosität von $\geqq$ 0,80, gemessen in Dimethylacetamid bei 30°C als 0,5 %ige Lösung, umsetzt.

2. Verfahren nach Anspruch 1, dadurch gekennzeichnet, daß als Diisocyanate c) ein Gemisch aus 50-85 Mol% trans-1,4-Cyclohexandiisocyanat und 50 bis 15 Mol-% an Hexamethylendiisocyanat und/oder 4,4'-Dicyclohexylmethan-diisocyanaten eingesetzt wird.

3. Verfahren nach Ansprüchen 1 und 2, dadurch gekennzeichnet, daß als Katalysatoren d) Zinnkatalysatoren eingesetzt werden.

4. Verfahren nach Anspruch 1, dadurch gekennzeichnet, daß als aliphatische Diamine Ethylendiamin oder Mischungen aus Ethylendiamin und höchstens 50 Mol-% an weiteren aliphatischen oder cycloaliphatischen Diaminen eingesetzt werden.

5. Verfahren nach Ansprüchen 1 bis 4, dadurch gekennzeichnet, daß die Kettenverlängerungsreaktion in Gegenwart von salzartigen Lösungsvermittlern auf Basis von Lithiumsalzen anorganischer Säuren oder organischer $C_1$-$C_8$-Carbonsäuren durchgeführt wird.

6. Verfahren nach Ansprüchen 1 bis 5, dadurch gekennzeichnet, daß der Lösungsvermittler Lithiumchlorid ist.

7. Verfahren nach Ansprüchen 1 bis 6, dadurch gekennzeichnet, daß als monofunktionelle Kettenabbrecher 0 - 5 Mol% Verbindungen der Formel,

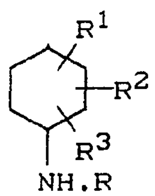

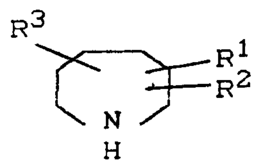

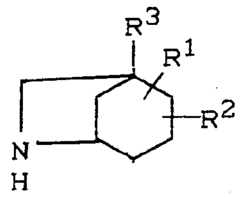
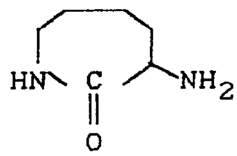

R = H, $C_1$-$C_4$-Akyl oder Cyclohexyl,

$R^1$ $R^2$, $R^3$ geradkettiges oder verzweigtes $C_1$-$C_4$-Alkyl oder aber mindestens eine der Gruppen $R^1$, $R^2$, $R^3$-.Alkyl bedeutet,

wenn nicht R = Alkyl oder Cycloalkyl ist.

**8.** Verfahren gemäß den Ansprüchen 1 bis 7, dadurch gekennzeichnet, daß als Dihydroxyverbindung a) solche mit einem Molekulargewicht von 1500 bis 4000 und daß als Katalysatoren d) von 0,005 bis 0,10 Gew.-% Zinnkatalysator eingesetzt werden.

**9.** Segmentierte Polyurethanharnstoff-Elastomere erhältlich aus dem Verfahren gemäß den Ansprüchen 1 bis 8, dadurch gekennzeichnet, daß sie eine inhärente Viskosität von ≧ 0,80 g/l, gemessen in Dimethylacetamid bei 30°C als 0,5 %ige Lösung, und eine Wärmeformbeständigkeit wie beschrieben ≧ 170°C, sowie eine Heißreißzeit wie beschrieben als Fäden ≧ 7 sec. aufweisen.

**10.** Segmentierte Polyurethanharnstoff-Elastomere nach Anspruch 9, dadurch gekennzeichnet, daß sie als Kettenabbrecher 0,1 bis 3 Mol-% 1-Amino-3-methylcylohexan, 1-Amino-2-methylcyclohexan, 1-Amino-3,3,5-trimethylcyclohexan

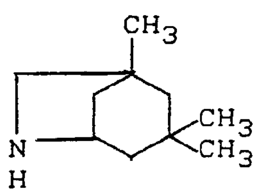
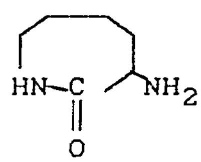

eingebaut enthalten.

**11.** Verfahren zur Herstellung von Fasern, Fäden oder Folien aus Polyurethanharnstoff-Elastomeren gemäß Anspruch 9, dadurch gekennzeichnet, daß die Elastomer Lösung mit üblichen Additiven versetzt durch Trocken- oder Naßspinnen bzw. Gießen verformt und gegebenenfalls die Lösungsvermittler durch Waschen oder Extrahieren aus den Fasern, Fäden oder Folien entfernt werden.

**12.** Fasern, Fäden oder Folien erhältlich nach dem Verfahren gemäß Anspruch 11.

## Claims

**1.** A process for the preparation of segmented polyurethaneurea elastomers based on relatively high molecular weight dihydroxy compounds, aliphatic and/or cycloaliphatic diisocyanates and diamines and chain terminators, optionally in the presence of solubilizing agents, characterised in that in a first stage, an isocyanate prepolymer of

a) a relatively high molecular weight dihydroxy compound having a molecular weight of from 1000 to 8000,

b) optionally with the addition of low molecular weight dihydroxy compounds having molecular weights of from 62 to 399 and

c) a mixture of molar excess quantities of diisocyanates (molar based on (a+b)) of

c1) from 50 to 85 mol-% (based on the diisocyanates used) of trans-1,4-cyclohexylene diisocyanate and

c2) from 50 to 15 mol-% of other aliphatic or cycloaliphatic diisocyanates

is reacted

(d) in the presence of from 0 to 0.15% by weight, based on a), of catalysts

(e) solvent-free or in solvents to produce an isocyanate prepolymer having an isocyanate content (based on the solids content) of from 1.5 to 3.5% and this isocyanate prepolymer is reacted, optionally after dilution with highly polar solvents, with solutions of (f-g) in highly polar solvents of

(f) aliphatic alkylene diamines or mixtures of

(f1) at least 50 mol-% of aliphatic $C_2$-$C_6$-alkylene diamines and

(f2) at most 50 mol-% of other aliphatic and/or cycloaliphatic diamines and

(g) from 0 - 5 mol-% of monofunctional amine chain terminators,

(h) in the presence of from 0 to 10% by weight of salt-type solubilizing agents, based on the polyurethane urea solids content,

to produce elastomer solutions having a concentration of at least 18% by weight solids content and an inherent viscosity $\geqq 0.80$, determined in dimethylacetamide at 30°C as a 0.5% solution.

2. A process according to Claim 1, characterised in that the diisocyanates c) used consist of a mixture of 50-85 mol-% of trans-1,4-cyclohexanediisocyanate and 50 to 15 mol-% of hexamethylene diisocyanate and/or 4,4'-dicyclohexylmethane diisocyanates.

3. A process according to Claims 1 and 2, characterised in that the catalysts d) used are tin catalysts.

4. A process according to Claim 1, characterised in that the aliphatic diamines used are ethylene diamine or mixtures of ethylene diamine and at most 50 mol-% of other aliphatic or cycloaliphatic diamines.

5. A process according to Claims 1 to 4, characterised in that the chain lengthening reaction is carried out in the presence of salt-type solubilizing agents based on lithium salts of inorganic acids or organic $C_1$-$C_8$-carboxylic acids.

6. A process according to Claims 1 to 5, characterised in that the solubilizing agent is lithium chloride.

7. A process according to Claims 1 to 6, characterised in that the monofunctional chain terminators used consist of 0 to 5 mol-% of compounds corresponding to the following formulae:

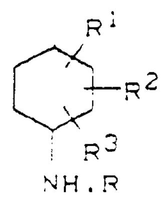

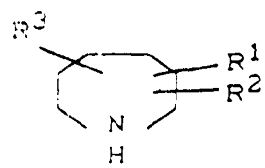

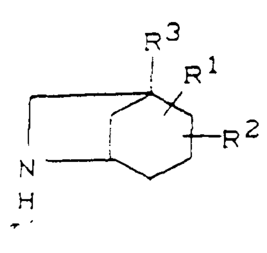

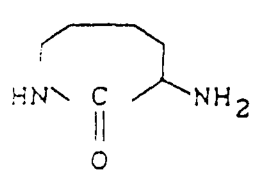

wherein R = H, $C_1$-$C_4$-alkyl or cyclohexyl,

$R^1$, $R^2$, $R^3$ denote straight chain or branched $C_1$-$C_4$-alkyl or at least one of the groups denoted by $R^1$, $R^2$ and $R^3$ is alkyl

unless R = alkyl or cycloalkyl.

8. A process according to Claims 1 to 7, characterised in that the dihydroxy compound a) used is one having

a molecular weight of from 1500 to 4000 and that the catalysts d) used consist of from 0.005 to 0.10% by weight of tin catalyst.

**9.** Segmented polyurethane urea elastomers obtainable by the process according to Claims 1 to 8, characterised in that they have an inherent viscosity ≧ 0.80 g/l determined in dimethyl acetamide at 30°C on a 0.5% solution, a heat distortion temperature as described of ≧ 170°C and a heat breaking time as threads as described of ≧ 7 sec.

**10.** Segmented polyurethane elastomers according to Claim 9, characterised in that they contain from 0.1 to 3 mol-% of 1-amino-3-methyl-cyclohexane, 1-amino-2-methyl-cyclohexane or 1-amino-3,3,5-trimethyl-cyclohexane

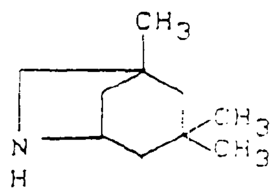

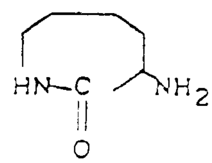

incorporated as chain terminators.

**11.** A process for the production of fibres, threads or films from polyurethane urea elastomers according to Claim 9, characterised in that the elastomer solution to which conventional additives have been added is shaped by dry or wet spinning or casting and the solubilizing agents are optionally removed from the fibres, threads or films by washing or extraction.

**12.** Fibres, threads or films obtainable by the process according to Claim 11.

## Revendications

**1.** Procédé de production d'élastomères polyuréthanne-urée segmentés à base de composés dihydroxyliques de poids moléculaire élevé, de diisocyanates aliphatiques et/ou cycloaliphatiques et de diamines, d'agents de terminaison de chaîne, le cas échéant en présence d'unisseurs, caractérisé en ce que

dans une première étape, on fait réagir un NCO-prépolymère dérivé

a) d'un composé dihydroxylique de poids moléculaire élevé, ayant des poids moléculaires de 1000 à 8000,

b) le cas échéant avec addition de composés dihydroxyliques de bas poids moléculaire, présentant des poids moléculaires de 62 à 399 et

c) d'un mélange de quantités en excès molaire de diisocyanates (quantité molaire par rapport à (a+b)) constitués

c1) de 50 à 85 moles % (par rapport aux diisocyanates utilisés) de trans-1,4-cyclohexylènediisocyanate et

c2) de 50 à 15 moles % d'autres diisocyanates aliphatiques ou cycloaliphatiques

d) en présence de 0 à 0,15 % en poids, par rapport à a), de catalyseurs,

e) à l'état fondu ou dans des solvants,

pour former un NCO-prépolymère ayant une teneur en NCO (sur base solide) de 1,5 à 3,5 % et on fait réagir ce NCO-prépolymère éventuellement après dilution avec des solvants fortement polaires,

avec des solutions dans des solvants fortement polaires de (f-g), à savoir

f) des alkylènediamines aliphatiques ou des mélanges

f1) d'au moins 50 moles % d'alkylènediamines aliphatiques en $C_2$ à $C_6$ et

f2) d'au plus 50 moles % d'autres diamines aliphatiques et/ou cycloaliphatiques, et

g) 0 à 5 moles % d'agents aminés mono-fonctionnels de terminaison de chaîne, et

h) en présence de 0 à 10 % en poids d'unisseurs du type de sels, par rapport à la quantité de polyuréthanne-urée sur base solide,

pour former des solutions d'élastomère ayant une concentration d'au moins 18 % en poids en matière

solide et une viscosité inhérente égale ou supérieure à 0,80, mesurée dans le diméthylacétamide à 30°C sous forme d'une solution à 0,5 %.

2. Procédé suivant la revendication 1, caractérisé en ce qu'on utilise comme diisocyanates c) un mélange de 50 à 85 moles % de trans-1,4-cyclohexanediisocyanate et de 50 à 15 moles % d'hexaméthylènediisocyante et/ou de 4,4'-dicyclohexylméthanediisocyanates.

3. Procédé suivant les revendications 1 et 2, caractérisé en ce qu'on utilise comme catalyseurs d) des catalyseurs à base d'étain.

4. Procédé suivant la revendication 1, caractérisé en ce qu'on utilise comme diamines aliphatiques l'éthylènediamine ou des mélanges d'éthylènediamine et d'un maximum de 50 moles % d'autres diamines aliphatiques ou cycloaliphatiques.

5. Procédé suivant les revendications 1 à 4, caractérisé en ce que la réaction d'allongement de chaîne est conduite en présence d'unisseurs du type de sels à base de sels de lithium d'acides inorganiques ou d'acides carboxyliques organiques en $C_1$ à $C_8$.

6. Procédé suivant les revendications 1 à 5, caractérisé en ce que l'unisseur est le chlorure de lithium.

7. Procédé suivant les revendications 1 à 6, caractérisé en ce qu'on utilise comme agents monofonctionnels de terminaison de chaîne 0 à 5 moles % de composés de formule

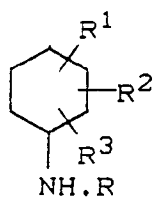

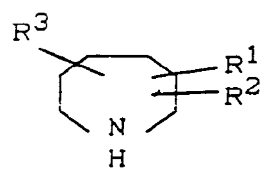

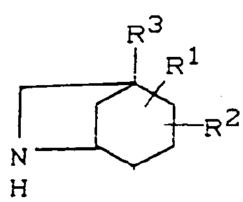

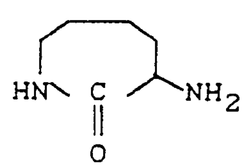

où R représente H, un groupe alkyle en $C_1$ à $C_4$ ou cyclohexyle,

$R^1$, $R^2$, $R^3$ représentent un groupe alkyle en $C_1$ à $C_4$, linéaire ou ramifié ou bien l'un au moins des groupes $R^1$, $R^2$ et $R^3$ est un groupe alkyle, si R n'est pas un groupe alkyle ou cycloalkyle.

8. Procédé suivant les revendications 1 à 7, caractérisé en ce qu'on utilise comme composé dihydroxylique a) des composés ayant un poids moléculaire de 1500 à 4000 et en ce qu'on utilise comme catalyseurs d) 0,005 à 0,10 % en poids de catalyseur à l'étain.

9. Elastomères polyuréthanne-urée segmentés obtenus par le procédé suivant les revendications 1 à 8, caractérisés en ce qu'ils présentent une viscosité inhérente égale ou supérieure à 0,80 g/l, mesurée sur une solution à 0,5 % dans le diméthylacétamide à 30°C, et une stabilité dimensionnelle à chaud, comme décrit, supérieure ou égale à 170°C de même qu'un temps de rupture en traction à chaud comme décrit, à l'état de fils, supérieure ou égale à 7 secondes.

10. Elastomères polyuréthanne-urée segmentés suivant la revendication 9, caractérisés en ce qu'ils contiennent comme agent de terminaison de chaîne une proportion incorporée de 0,1 à 3 moles % de 1-amino-3-méthylcyclohexane, de 1-amino-2-méthylcyclohexane, de 1-amino-3,3,5-triméthylcyclohexane,

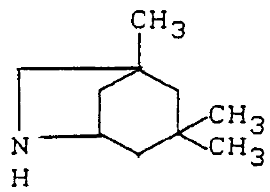 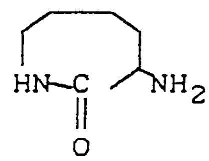

**11.** Procédé de production de fibres, de fils ou de films d'élastomères de polyuréthanne-urée suivant la revendication 9, caractérisé en ce que la solution d'élastomère additionnée d'additifs classiques est transformée par filage par voie sèche ou par voie humide ou respectivement par coulée et, le cas échéant, les unisseurs sont éliminés des fibres, des fils ou des films par lavage ou par extraction.

**12.** Fibres, fils ou films obtenus par le procédé suivant la revendication 11.